# EUROPEAN PATENT APPLICATION

(11) **EP 4 845 209 A1**
(43) Date of publication of application: **25.11.2026**
(21) Application number: 25742329.3
(22) Date of filing: 17.01.2025
(51) Int. Cl.: H04W 24/10, H04W 24/08, H04W 72/21, H04W 72/232, H04W 72/1268, H04W 72/0446, H04B 7/06, H04W 52/10, H04W 52/14

(54) **METHOD AND DEVICE FOR PERFORMING UPLINK TRANSMISSION/RECEPTION IN WIRELESS COMMUNICATION SYSTEM**

(30) Priority: 18.01.2024 KR 20240008232; 06.03.2024 KR 20240032211
(71) Applicant: LG Electronics Inc., Yeongdeungpo-gu Seoul 07336 (KR)
(72) Inventor: KANG, Jiwon, Seoul 06772 (KR); KIM, Seonwook, Seoul 06772 (KR); KIM, Hyungtae, Seoul 06772 (KR); YANG, Suckchel, Seoul 06772 (KR); GO, Seongwon, Seoul 06772 (KR)
(74) Representative: Plasseraud IP
(86) International application number: PCT/KR2025/099086
(87) International publication number: WO 2025/155181

(57) **Abstract**

Disclosed are a method and a device for performing uplink transmission/ reception in a wireless communication system. A method according to an embodiment of the present disclosure may comprise the steps of: receiving, by a terminal, first configuration information related to an event from a base station; encoding, by the terminal, the information related to the event on a first uplink channel on the basis of second configuration information related to a scheduling request (SR) on the basis of the occurrence of the event; and on the basis that the first uplink channel overlaps a second uplink channel including the SR or a link recovery request (LRR), transmitting the first or second uplink channel to the base station by the terminal on the basis of the priority of the information related to the event. The priority of the information related to the event may be higher than or equal to the priority of the SR and may be lower than or equal to the priority of the LRR.

## Description

### [Technical Field]

The present disclosure relates to a wireless communication system, and more specifically to a method and device for performing uplink transmission and reception in a wireless communication system.

### [Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

The technical problem of the present disclosure is to provide a method and device for performing uplink transmission and reception in a wireless communication system.

Additionally, an additional technical objective of the present disclosure is to provide a method and device for performing an event-based transmission and reception procedure.

The technical objects to be achieved by the present disclosure are not limited to the above-described technical objects, and other technical objects which are not described herein will be clearly understood by those skilled in the pertinent art from the following description.

### [Technical Solution]

A method according to one embodiment of the present disclosure may include receiving, by a user equipment (UE) from a base station, first configuration information related to an event; based on an occurrence of the event, encoding, by the UE, information related to the event on a first uplink channel based on second configuration information related to a scheduling request (SR); and based on the first uplink channel being overlapped with a second uplink channel including the SR or a link recovery request (LRR), transmitting, by the UE to the base station, the first uplink channel or the second uplink channel based on a priority of the information related to the event, and the priority of information related to the event may be higher than or equal to a priority of the SR and lower than or equal to a priority of the LRR.

A method according to one embodiment of the present disclosure may include transmitting, by a base station to a user equipment (UE), first configuration information related to an event; and based on an occurrence of said event, receiving, by the base station from the UE, i) a first uplink channel including information related to the event or ii) a second uplink channel including a scheduling request (SR) or a link recovery request (LRR), based on a priority related to event, and the first uplink channel and the second uplink channel may be overlapped in a same time resource, the information related to the event may be encoded on the first uplink channel based on second configuration information related to the SR, and a priority of the information related to the event may be higher than or equal to a priority of the SR and lower than or equal to a priority of the LRR.

### [Technical Effects]

According to an embodiment of the present disclosure, a method and device for performing uplink transmission and reception in a wireless communication system may be provided.

Additionally, by various embodiments of the present disclosure, a method and apparatus for performing an event-based transmission and reception procedure may be provided.

Additionally, by various embodiments of the present disclosure, overhead related to uplink resources for beam/CSI reporting may be reduced during an event-based transmission procedure.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a flowchart illustrating a method for a UE to perform a communication procedure according to an embodiment of the present disclosure.
FIG. 8 is a flowchart illustrating a method for a base station to perform a communication procedure according to an embodiment of the present disclosure.
FIG. 9 is a diagram illustrating a signaling process according to an embodiment of the present disclosure.
FIG. 10 is a diagram illustrating a block configuration of a wireless communication device according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

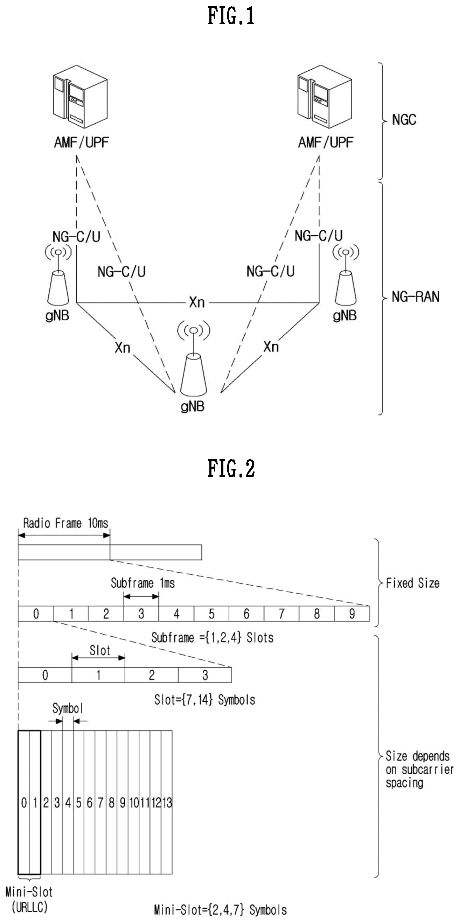

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 sub frames having a duration of T_{sf}=(ΔfₘₐₓN_{f}/1000)·T_{c}=1ms, respectively. In this case, there may be one set of frames for an uplink and one set of frames for a downlink. In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈{0,..., Nₛₗₒₜ^{subname,µ}-1} in a sub frame and are numbered in an increasing order of n_{s,f}^{µ}∈{0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used.

Table 3 represents the number of OFDM symbols per slot (N_{symb}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

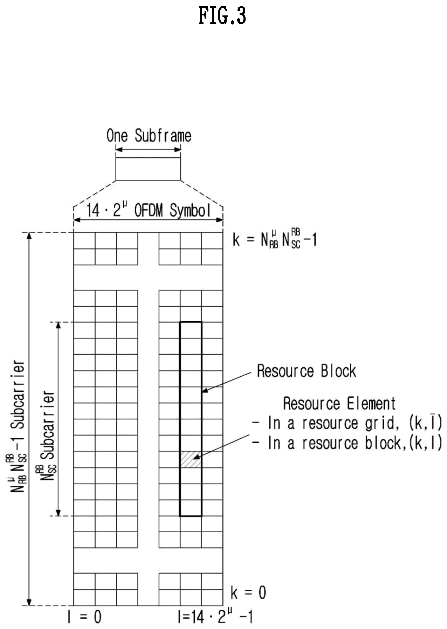

FIG. 3 illustrates a resource grid in a wireless communication system to which the present disclosure may be applied. In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k,l').

Here, k=0,...,N_{RB}^{µ}N_{sc}^{RB}-1 is an index in a frequency domain and l=0,...,2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l}^{(p,µ)}. When there is no risk of confusion or when a specific antenna port or numerology is not specified, indexes p and µ may be dropped, whereupon a complex value may be a_{k,l}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

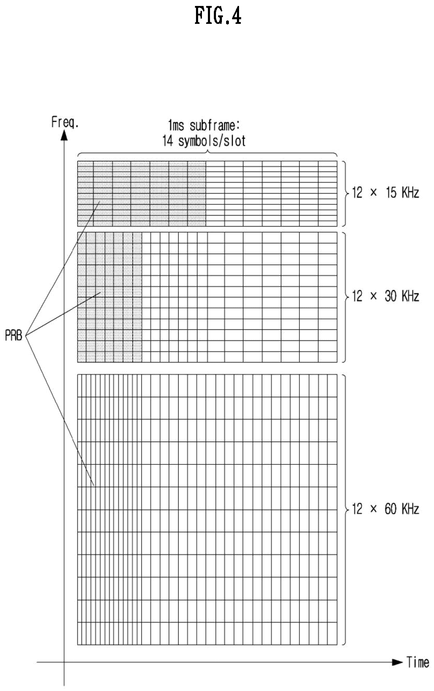

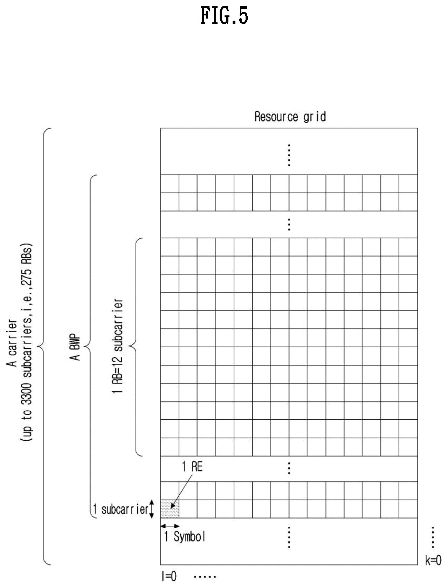

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

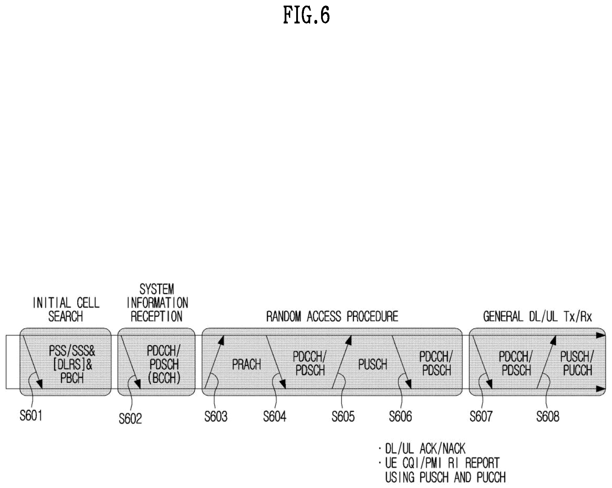

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Basic beam failure recovery (BFR)

The UE and/or the base station may perform uplink/downlink beam management (BM) for data transmission/reception. Here, BM may refer to a process of obtaining and maintaining a beam set that can be used for downlink and uplink transmission/reception.

Specifically, BM may include a beam measurement process of measuring the characteristics of a beamforming signal received from a base station or a UE, a beam determination process of determining a transmission beam (Tx beam) and a reception beam (Rx beam) of the base station or the terminal itself, a beam sweeping process of covering a spatial region using a transmit beam and/or a receive beam for a predetermined time interval in a predetermined manner, and a beam reporting process in which the UE reports information of the beam signal to the base station based on the beam measurement result.

While the above-described uplink/downlink BM process is performed, a beam mismatch problem may occur due to various factors. For example, when the UE moves or rotates, or when a radio channel environment is changed due to movement of a nearby object (e.g., when it was a line-of-sight (LoS) environment and then changed to a non-LoS environment as the beam was blocked), an optimal uplink/downlink beam pair may be changed. At this time, when the UE or the base station fails to track the changed optimal uplink/downlink beam pair (i.e., BM tracking), it may be considered that a beam failure has occurred.

The UE may determine whether beam failure has occurred based on the reception quality of a downlink reference signal (RS). In addition, the UE must report a report message on whether beam failure has occurred or a message for a beam recovery request (beam failure recovery request message, BFRQ message) to the base station. Upon receiving the message, the base station may perform a beam recovery process through various processes such as beam RS transmission or beam report request for beam recovery. This series of beam recovery processes is called a beam failure recovery (BFR) process.

The basic BFR operation includes a BFR process for a special cell (SpCell) (i.e., a primary cell, PCell) or a primary secondary cell (PScell) in which a contention-based PRACH resource exists. The BFR process may consist of a beam failure detection (BFD) process of the UE, a BFRQ transmission process, and a process of monitoring the response of the base station to the BFRQ, and each process may be performed in a serving cell.

### Beam failure detection (BFD)

When the quality value (Q_out) of all PDCCH beams falls below a predefined value, it may be considered that one beam failure instance has occurred. Here, the quality value may be determined based on a hypothetical block error rate (BLER). That is, the theoretical BLER may mean a probability that demodulation of the control information fails when the control information is transmitted on a specific PDCCH.

In addition, one or a plurality of search spaces for monitoring the PDCCH may be configured in the UE, and a PDCCH beam may be configured differently for each search space. In this case, when the quality values of all PDCCH beams fall below the predefined value, it means that the quality values of all PDCCH beams fall below the BLER threshold.

Two methods, which will be described later, may be supported as a method for the UE to receive an indication/configuration of a BFD-RS from the base station for determining whether a beam failure instance has occurred.

As a first method, an implicit configuration method of BFD-RS may be supported. A control resource set (CORESET) ID, which is a resource region in which the PDCCH may be transmitted, is configured in each search space, and RS information (e.g., CSI-RS resource ID, SSB ID) QCLed in terms of spatial RX parameters may be indicated/configured for each CORESET ID. In view of spatial reception parameters, the QCLed RS may be indicated or configured through transmit configuration information (TCI). That is, the BFD-RS may be implicitly configured/indicated to the UE based on QCL information indicated or configured through TCI.

Here, when the base station indicates or configures the RS (i.e., QCL Type D RS) that is QCL from the point of view of the spatial reception parameter to the UE, when the UE receives a specific PDCCH DMRS, the beam used for reception of the RS that is QCL from the point of view of the spatial reception parameter may be used. That is, a signal may be transmitted between spatially QCLed antenna ports through the same transmission beam or similar transmission beams (e.g., when beam widths are different while beam directions are the same/similar).

As a second method, an explicit configuration method of the BFD-RS may be supported. The base station may explicitly configure or indicate the UE to use the beam RS for BFD. In this case, the beam RS may correspond to the 'all PDCCH beams'.

The UE physical layer may inform the MAC sublayer that the BFI(beam failure instance) has occurred whenever an event in which the theoretical BLER measured based on the configured (or indicated) BFD-RS deteriorates beyond a specific threshold value occurs. And, when BFI occurs a certain number of times (e.g. 'beamFailureInstanceMaxCount') within a certain time (e.g., 'BFD timer'), the UE MAC sublayer may determine that a beam failure has occurred and initiate a related RACH operation.

### BFRQ (PRACH based): new beam identification and PRACH transmission

As described above, when more than a certain number of BFIs are generated, the UE may determine that a beam failure has occurred, and may perform a beam failure recovery operation. The UE may perform a BFRQ process based on RACH (i.e., PRACH) as an example of a beam failure recovery operation. Hereinafter, the corresponding BFRQ process will be described in detail.

When a beam failure occurs, the base station may configure a candidate beam RS list ('candidateBeamRSList') including replaceable candidate beam RSs to the terminal through RRC signaling. And, the base station may configure a dedicated PRACH resource for the candidate beam RSs. In this case, the dedicated PRACH resource may be a non-contention based PRACH resource (or a contention free PRACH resource). When an alternative beam RS is not found in the candidate beam RS list, the UE may select at least one of preset SSB resources. And, the UE may transmit a contention-based PRACH to the base station based on at least one selected.

### Enhanced beam failure recovery

When carrier aggregation (CA) is applied, there may be no uplink carrier (UL carrier) in a specific SCell. That is, in the case of an SCell having only a downlink carrier, uplink transmission is impossible. And, even if there is an uplink carrier in the SCell, the contention-based PRACH cannot be configured. Therefore, the PRACH-based BFR process to which CA is applied may be limitedly applied only to the SpCell (PCell or PSCell), and the BFR process may not be supported for the SCell. That is, according to the basic BFR operation, the PRACH-based BFR operation in the SpCell may not be supported in the SCell.

Specifically, when a high-frequency band requiring BFR is configured to the SCell, the PRACH-based BFR process may not be supported in the corresponding high-frequency band. For example, when the PCell is operated in a low frequency band (e.g., 6 GHz or less) and the SCell is operated in a high frequency band (e.g., 30 GHz), there is a problem that the PRACH-based BFR process is not supported in a high-frequency band that requires more BFR support.

In order to solve the above-mentioned problem, the improved BFR operation includes an operation for the BFR of the SCell. For example, the UE may perform BFRQ for the SCell by using a dedicated PUCCH resource for BFRQ configured in the SpCell. Hereinafter, the 'dedicated PUCCH resource' will be referred to as BFR-PUCCH for convenience of description.

The role of the BFR-PUCCH is to report only 'BF occurrence information for SCell' to the base station. And, detailed information related to the generated BF may be transmitted to the base station through the BFR MAC-CE or UCI as a subsequent report.

Here, the detailed information transmitted as the follow-up report may include information on the SCell(s) in which BF has occurred, whether or not there is a new candidate beam for the SCell(s) in which BF has occurred, and (if there is a new candidate beam) the corresponding beam RS ID.

In addition, the BFR-PUCCH may use the same PUCCH format as an SR (scheduling request), and may be defined through the ID of a specific SR for BFR use. If the UL-SCH allocated from the base station exists when the UE detects the BF for the SCell, the UE may omit the BFR-PUCCH transmission procedure like the SR transmission procedure, and transmit the BFR MAC-CE to the base station through the directly allocated UL-SCH.

In a multi-TRP environment, multi-DCI and/or single-DCI-based TRP-specific BFR operations may be applied. First, the base station may explicitly or implicitly set BFD RS for the UE. For example, the base station may configure two or more BFD-RS sets for the UE via RRC or/and MAC-CE. As another example, BFD-RS sets may be configured based on the TCI status per CORESET pool. The UE may determine whether a beam fails per TRP based on the aforementioned BFD-RS sets.

When a beam failure is detected, an SR PUCCH resource may be configured for the UE according to the base station's BFRQ resource. Separate SR PUCCH resources may be configured for each TRP, or the same SR PUCCH resource may be used by two TRPs. The UE may transmit the BFRQ SR PUCCH configured when a beam failure occurs in a specific TRP (to a TRP where no beam failure has occurred). The TRP that receives the BFRQ may transmit a UL Grant DCI to the UE, and the UE may transmit a BFR MAC-CE via a PUCCH scheduled/assigned by the UL Grant DCI. The BFR MAC-CE may include a CC list where the beam failure occurred, information about the failed BFR RS set, information about whether a new beam has occurred, etc.

### PUCCH Configuration and Format

PUCCH may carry uplink control information (UCI). UCI may include SR, HARQ-ACK, CSI, etc. SR may be used to request UL-SCH resources. HARQ-ACK is a reception acknowledgment signal for DL signals. HARQ-ACK responses may include ACK, NACK (negative acknowledgment), DTX (discontinuous transmission), and NACK/DTX. HARQ-ACK may be used interchangeably with A/N, ACK/NACK, and HARQ-ACK/NACK. HARQ-ACK may be generated in TB units or CBG units.

PUCCH formats may be classified according to UCI payload size/transmission length (e.g., number of symbols constituting the PUCCH resource)/transmission structure. PUCCH formats can be classified into short PUCCH (formats 0, 2) and long PUCCH (formats 1, 3, 4) based on transmission length.

For example, when the PUCCH format is 0, the supported UCI payload size is at most 2 bits, and the number of OFDM symbols constituting a single PUCCH may be 1 to 2. For another example, when the PUCCH format is 2, the supported UCI payload size is greater than 2 bits, and the number of OFDM symbols constituting a single PUCCH may be 1 to 2.

As another example, when the PUCCH format is 1, the supported UCI payload size is up to 2 bits, and the number of OFDM symbols constituting a single PUCCH can be 4 to 14. As another example, when the PUCCH format is 3 or 4, the supported UCI payload size is greater than 2 bits, and the number of OFDM symbols constituting a single PUCCH can be 4 to 14.

### Scheduling request (SR)

An SR may be used to request UL-SCH resources for a new transmission. A terminal (e.g., the UE's MAC entity) may receive zero or one or more SR configurations. An SR configuration may consist of a set of PUCCH resources for SRs across different BWPs and cells.

For logical channel or SCell beam failure recovery and consistent LBT (listen before talk) failure recovery, PUCCH resources for SR may be configured up to 1 per BWP. For logical channels providing a radio bearer configured for SDT (small data transmission), PUCCH resources for SR may not be configured for SDT. For beam failure recovery of the serving cell's BFD-RS set, PUCCH resources for SR may be configured up to 2 per BWP. For positioning measurement gap activation/deactivation requests, dedicated SR configurations may be configured.

Each SR configuration may correspond to one or more logical channels and/or SCell beam failure recovery and/or consistent LBT failure recovery and/or beam failure recovery of a BFD-RS set and/or position measurement gap activation/deactivation request. Each logical channel, SCell beam failure recovery, beam failure recovery of a BFD-RS set and consistent LBT failure recovery may map to zero or one SR configuration set in the RRC. The SR configuration of the logical channel that triggered the BSR or DSR, or SCell beam failure recovery or beam failure recovery of a BFD-RS set or consistent LBT failure recovery (if such configurations exist), or position measurement gap activation/deactivation request may be considered as the SR configuration corresponding to the triggered SR. All SR configurations may be used for SRs triggered by pre-emptive BSRs or timing advance reporting.

### Event-based/triggered transmission and reception procedures

In describing the present disclosure, "/" means "and", "or", or "and/or" depending on the context. Additionally, "beam" in the present disclosure may mean a source RS for a "spatial filter" or "spatial relationship," and may be interpreted as a QCL (type-D) RS, a (DL/UL/joint) TCI state, or (in the case of an uplink) a spatial relationship RS.

In wireless communication systems, Layer-1 (e.g., physical layer) based uplink control information has the advantage of having a smaller transmission delay compared to higher layer based control information. For example, in order for a UE to transmit information to a base station via MAC-CE or RRC messages, the UE's SR procedure and the base station's PUSCH allocation procedure (based on the SR) may be required, and there is a delay and overhead associated with this. In addition, generally, the higher the layer information, the longer the time required to decode the information (e.g., decoding time or/and processing time).

On the other hand, in order to transmit Layer-1 based uplink control information, UL physical channel resources (e.g., PUCCH, PUSCH) must be (pre-)configured/allocated to the terminals. Therefore, from the perspective of the base station/network, as the number of UEs increases, the amount of UL resources to be allocated to each UE may increase, and the overall UL resource overhead burden may increase accordingly.

Accordingly, in a wireless communication system, information that needs to be transmitted relatively urgently for the operation of the physical layer (e.g., SR (e.g., SR for PUSCH allocation), HARQ-ACK (e.g., HARQ-ACK for retransmission), CSI (e.g., CSI for scheduling/MCS/precoder determination), beam information (e.g., beam information for (analog) beam determination) can be transmitted and received via the physical layer UCI.

Here, the base station or/and network may determine/control the reporting timing of HARQ-ACK, CSI, beam information, etc., excluding SR. When such network-initiated/triggered reporting procedures are applied, there is a limitation that in environments where the radio channel condition is likely to change rapidly, the reporting timing must be configured/indicated so that the terminal can frequently transmit UCI.

That is, in environments where the wireless channel conditions change rapidly, the UL resource overhead for UCI reporting and the related DL measurement RS overhead may increase, and there may be a problem where the power consumption of the terminal increases due to the frequent UL transmission of the terminal. Additionally, or alternatively, the more terminals there are within the cell/TRP coverage, the greater the UL resource overhead may be because UL resources must be allocated to each UE.

To overcome the limitations of such NW-initiated/triggered reporting, UE-initiated/triggered reporting methods or event-based/triggered reporting methods may be applied.

When a UE-initiated/triggered reporting method or an event-based/triggered reporting method is applied, the UE may decide whether or when to report (such as UCI). That is, the UE may perform the relevant (UCI) report only when necessary (e.g., only when a specific event occurs). Accordingly, UL resource overhead and UE power consumption can be reduced. Additionally, since the UE reports information based on Layer-1/lower layers, faster reporting may be possible.

Accordingly, standardization of UE-initiated/triggered beam reporting methods can be carried out in next-generation wireless communication systems.

In addition, for the efficient operation of UL resources in next-generation wireless communication systems, UE-initiated/triggered or event-based transmission methods can be applied to control information, TB (transport block), and user-plane data transmission procedures transmitted through UCI and/or MAC-CE.

Examples of event-based or UE-initiated/triggered transmission and reception procedures in wireless communication systems include SR and BFR reporting methods. The SR reporting method includes an action of reporting whether PUSCH allocation is required for UL-SCH transmission.

For example, a BFR reporting method includes an operation to report whether a BF has occurred and information related to a new beam. Here, information regarding whether a BF has occurred and information related to a new beam may be transmitted to a base station in an explicit or implicit manner (e.g., a method of transmitting a new beam index as PRACH resource selection information). Additionally, information regarding whether a BF has occurred and information related to a new beam may be transmitted in one step or in multiple steps through one or two UL resources. For example, a UE may transmit BFRQ to a base station via PUCCH and transmit beam information to a base station via MAC-CE on PUCCH.

In describing the present disclosure, information transmitted by a UE to a network via an event-based and/or UE-initiated/triggered transmission method (e.g., SR, BFRQ, new beam information, etc.) shall be collectively referred to as "event information".

Event information may consist of one or more information parts/blocks, and encoding/rate matching/RE mapping may be performed on a part/block basis. Additionally, each information part/unit may be transmitted via different transmission methods. For example, BFRQ may be transmitted and received via UCI as an L1 message, and new beam information may be transmitted and received via MAC-CE as an L2 message.

The present disclosure is described primarily with respect to event-based or UE-initiated/triggered beam reporting, but is not limited thereto. The method according to the present disclosure may also be applied to other event-based or UE-initiated/triggered transmission and reception procedures (e.g., UCI/CSI/MAC-CE reporting procedures, uplink transmission and reception procedures, etc.).

In describing the present disclosure, "beam" may be interpreted/substituted as a source RS for a "spatial filter" or "spatial relation," or as a QCL (Type D) RS, TCI state, or (in the case of an uplink) spatial relation RS. Additionally, "serving beam" may include a beam associated with a PDCCH/PDSCH.

The following describes how to support UE-initiated/triggered transmission methods (e.g., reporting methods) or event-based/triggered transmission methods (e.g., reporting methods) and improve reliability.

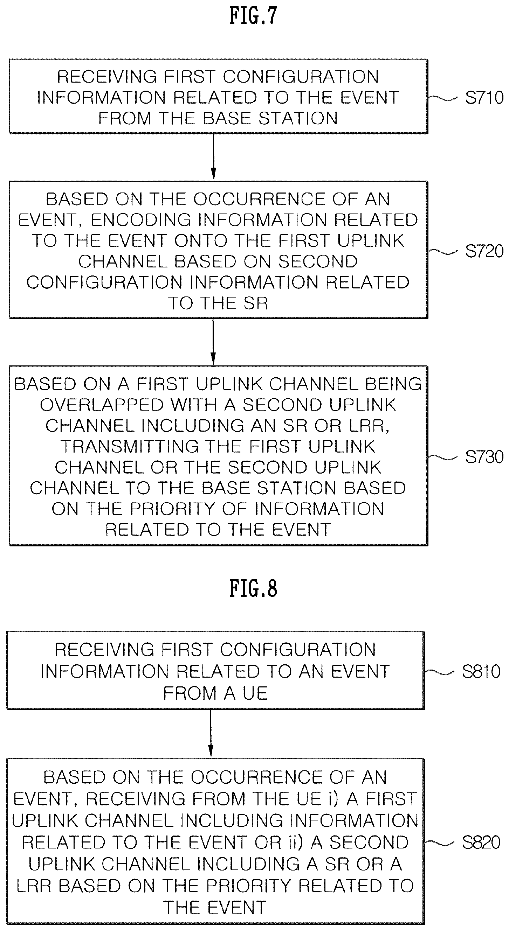

FIG. 7 is a flowchart illustrating a method for a UE to perform a communication procedure as an embodiment of the present disclosure.

The UE may receive first configuration information related to the event from the base station (S710).

For example, the first configuration information related to an event may include at least one of the following: the type of the event, the criteria related to the event, the type of information to be reported upon the occurrence of the event (e.g., information related to the event), and the resources of the uplink channel for reporting the information related to the event (e.g., (CG) PUSCH, PUCCH, etc.). That is, the event-related configuration information may include criteria and/or thresholds for determining whether an event has occurred or/and the type of the event. The UE may monitor whether an event has occurred according to the first configuration information. Here, the first uplink channel may include (configured grant (CG)) PUSCH or/and PUCCH, etc.

Based on the occurrence of an event, the UE may encode information related to the event onto the first uplink channel based on second configuration information related to the scheduling request (SR) (S720).

The type of information associated with an event may vary depending on the type of event occurring, and may be configured or predefined by the first configuration information. For example, if the event is an event associated with beam reporting, the information associated with the event may include beam reporting information (e.g., information about new/serving beams, etc.), information regarding whether beam reporting information is included on the uplink channel transmitted after the first uplink channel, etc. Here, the information associated with the event may be included in uplink control information (UCI).

For example, if information regarding whether beam report information is included on an uplink channel (e.g., a third uplink channel) transmitted after the first uplink channel is included on the first uplink channel, the UE may transmit the third uplink channel including the beam report information to the base station. Also, the encoding method related to the beam report information may be an encoding/multiplexing/mapping method applied to the SR as described below, but is not limited thereto.

As an example of the present disclosure, information related to an event may be encoded/mapped by a UE on a first uplink channel based on second configuration information related to a scheduling request (SR). Here, the second configuration information related to the SR may include at least one of the period, offset, priority, resource, encoding method, or ID (identifier) of the SR, but is not limited thereto.

Additionally or alternatively, information related to the event may be encoded/mapped/multiplexed on the first uplink channel according to a predefined encoding/mapping/multiplexing method for the SR.

That is, information related to the event can be mapped/multiplexed/encoded on the first uplink channel based on the RE mapping/multiplexing/encoding method applied to the SR.

Based on a first uplink channel being overlapped with a second uplink channel including an SR or LRR (on the same time/frequency resource), the UE may transmit the first uplink channel or the second uplink channel to the base station based on the priority of information related to the event (S730). In one example of the present disclosure, the priority of information related to the event may be higher than or equal to the priority of the SR and lower than or equal to the priority of the link recovery request (LRR) (or BFRQ). Accordingly, when a first uplink channel including information related to the event overlaps with a second uplink channel including an SR or/and LRR, the UE may determine the uplink channel to transmit preferentially based on the priority of each piece of information.

For example, based on the first uplink channel being overlapped with a second uplink channel including an SR, the UE may transmit the first uplink channel to the base station in priority based on the priority of information related to the event. That is, the second uplink channel (or SR) may be dropped. For example, based on the fact that a first uplink channel overlaps with a second uplink channel including an LRR, the terminal may transmit the second uplink channel to the base station in priority based on the priority of information related to the event. That is, the first uplink channel (or information related to the event) may be dropped.

Additionally or alternatively, the UE may repeatedly transmit information related to the event to the base station. For example, the first configuration information may include information related to the transmission period of information related to the event (e.g., the period of the transmission occasion (TO) for transmitting information related to the event) and/or the number of transmissions (e.g., the number of TOs for transmitting information related to the event).

However, this is merely one embodiment, and information regarding the transmission period and/or number of transmissions of information related to an event may be transmitted to the UE through separate configuration information. The UE may repeatedly transmit information related to an event to the base station based on the transmission period and number of transmissions of information related to the event.

Additionally or alternatively, based on the first uplink channel being transmitted to the base station, a timer related to the retransmission of information related to the event (e.g., an event-related timer) may be operated. The time duration for the event-related timer may be configured by the timer-related configuration information transmitted from the base station, but is not limited thereto and may be predefined.

Based on the response message regarding information related to an event being not received from the base station before the timer expires, the UE may retransmit information related to the event to the base station. Based on the response message regarding information related to the event being received from the base station before the timer expires, the timer may be suspended/stopped, and the retransmission (or preparation/waiting for retransmission) of information related to the event by the terminal may be suspended/stopped. Here, the response message may include an ACK (acknowledgement) message for the first uplink channel, etc.

Additionally or alternatively, downlink control information associated with the first uplink channel (e.g., control information for scheduling the first uplink channel or/and activating resources associated with the first uplink channel) may include a (open-loop) power control parameter set indicator field. The power of the first uplink channel may be determined based on the power control parameter set indicator field. For example, if an SRI (SRS resource indicator) is included in the downlink control field, the power control parameter set indicator field value may be set to 1. If an SRI is not included in the downlink control field, the power control parameter set indicator field value may be set to 01 or 10.

Additionally or alternatively, the UE may receive downlink control information related to the first uplink channel from the base station. Here, the UE may transmit an ACK message for the downlink control information to the base station.

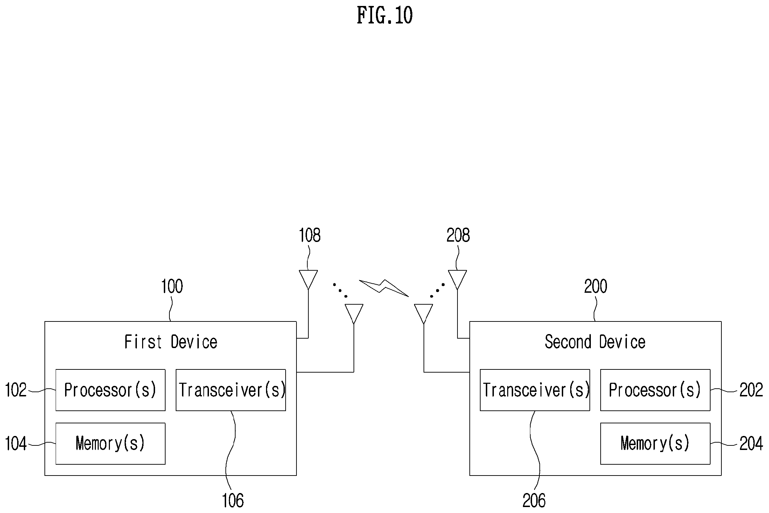

The method described in the example of FIG. 7 can be performed by the first device (100) of FIG. 10. For example, one or more processors (102) of the first device (100) of FIG. 10 may receive first configuration information related to an event from a base station through one or more transceivers (106). Based on the occurrence of an event, one or more processors (102) may encode information related to the event onto a first uplink channel based on second configuration information related to an SR. Based on the first uplink channel being overlapped with a second uplink channel including an SR or LRR, one or more processors (102) may transmit the first uplink channel or the second uplink channel to a base station through one or more transceivers (106) based on the priority of information related to the event.

Furthermore, one or more memories (104) of the first device (100) may store instructions for performing the method described in the example of FIG. 7 or the examples described below when executed by one or more processors (102).

FIG. 8 is a flowchart illustrating a method for a base station to perform a communication procedure as an embodiment of the present disclosure.

A base station may receive first configuration information related to an event from a UE (S810). Specifically, the base station may transmit the first configuration information related to the event and/or configuration information related to the first uplink channel to the UE. Since examples of configuration information have been described with reference to FIG. 7, redundant descriptions will be omitted.

Based on the occurrence of an event, the base station may receive from the UE i) a first uplink channel including information related to the event or ii) a second uplink channel including a scheduling request (SR) or a link recovery request (LRR) based on the priority related to the event (S820). Here, the information related to the event may be encoded on the first uplink channel based on second configuration information related to the SR or according to a predefined method related to the SR. And, the first uplink channel and the second uplink channel may overlap at the same time resource.

For example, based on the first uplink channel being overlapped with a second uplink channel including SR, the base station may receive the first uplink channel from the UE based on the priority of information related to the event. For another example, based on the first uplink channel being overlapped with a second uplink channel including LRR, the base station may receive the second uplink channel from the UE based on the priority of information related to the event.

The method described in the example of FIG. 8 may be performed by the second device (200) of FIG. 10. For example, one or more processors (202) of the second device (200) of FIG. 10 may transmit first configuration information related to an event to a UE through one or more transceivers (206). Based on the occurrence of an event, one or more processors (202) may receive from the UE through one or more transceivers (106) a first uplink channel including information related to the event or ii) a second uplink channel including SR or LRR based on the priority related to the event.

Furthermore, one or more memories (204) of the second device (200) may store instructions for performing the method described in the example of FIG. 8 or the examples described below when executed by one or more processors (202).

Hereinafter, UE-initiated/triggered transmission/reception methods (e.g., reporting methods, etc.) or event-based/triggered transmission/reception methods will be described in more detail.

Event-based beam reporting methods may include UCI-based beam reporting methods (Method 1), MAC-CE-based beam reporting methods (Method 2), and PRACH-based beam reporting methods (Method 3).

### UCI-based beam reporting method

As an example of the present disclosure, a UCI-based beam reporting operation may be performed via a dedicated SR PUCCH for reporting the occurrence of an event (Method 1-1). For example, for reporting an event, the dedicated SR PUCCH may include information for reporting the occurrence of an event (e.g., UCI), and the UE may transmit the said dedicated SR PUCCH to a base station. Subsequently, the UE may transmit information related to the beam reporting (e.g., information about a new beam ID via CRI/SSBRI, information about a beam quality value via L1-RSRP/SINR, etc.) to the base station (via an uplink control channel, etc.). That is, a UCI-based beam reporting operation may be performed in two steps.

Additionally or alternatively, the UE may transmit MAC-CE to the base station via the assigned PUSCH, and MAC-CE may include information for reporting the occurrence of an event and/or information related to beam reporting (Method 1-1a). That is, similar to the enhanced beam failure recovery operation described above, information for reporting the occurrence of an event and/or information related to beam reporting may be transmitted to the base station.

Additionally or alternatively, a regular UCI may include information for reporting the occurrence of an event and/or information related to beam reporting (Method 1-1b). In this case, the SR transmitted by the UE may request beam reporting triggering from the AP rather than UL-SCH assignment.

As an example of the present disclosure, a UCI-based beam reporting operation may be performed through a dedicated/configured CSI PUCCH (Method 1-2). Method 1-2 is an extension of the SR PUCCH method to an event-based beam reporting method. (Some) CSI PUCCH resources may be configured for event-based reporting such as P/SP CSI reporting of the PUCCH, but the UE may decide whether to transmit the CSI at each transmission occasion.

As an example of the present disclosure, a UCI-based beam reporting operation can be performed through a configured PUSCH (Method 1-3).

As an example of the present disclosure, when a CG PUSCH resource based on CG PUSCH type 1 is set via RRC signaling, or when a CG PUSCH resource based on CG PUSCH type 2 is set/instructed via RRC signaling and DCI, the UE may transmit CSI (along with UL-SCH) to the base station when an event occurs in the said CG PUSCH resource (Method 1-3a).

As another example of the present disclosure, when an event occurs, the UE may transmit a CSI to the base station through an SP CSI PUSCH resource configured/indicated via RRC signaling and DCI (Method 1-3b).

### MAC-CE-based beam reporting method

A normal SR may be used to request a PUSCH assignment. And, an operation according to method 1-1a described above may be performed. For example, MAC-CE may include information for reporting the occurrence of an event and/or information related to beam reporting.

### PRACH-based beam reporting method

As an example of the present disclosure, a PRACH-based beam reporting method may be used to report the occurrence of an event (Method 3-1). In this case, the PRACH transmission procedure may include a contention-based PRACH transmission procedure or a non-contention-based PRACH transmission procedure. In particular, when a non-contention-based PRACH transmission procedure is performed, a connection relationship between a new beam and a PRACH resource/occasion may be established, such as in a BFR procedure. Through this, information about the new beam as well as the occurrence of an event may be transmitted to the UE via the PRACH (selected by the terminal).

Additionally or alternatively, beam information can be transmitted to a base station via MAC-CE or UCI, as in methods 1-1a and 1-1b.

As another example of the present disclosure, a beam reporting method may be performed based on PUSCH following PRACH (e.g., similar to the transmission procedure of Msg. A of a contention-based 2-step RACH) (Method 3-2). For example, when an event occurs, the UE may select a PRACH preamble and transmit the selected PRACH preamble to the base station. Then, the UE may perform beam reporting through the PUSCH connected to the PRACH preamble. For example, the PRACH preamble may include information related to whether an event has occurred, and the PUSCH may include CSI/UCI information, etc.

Where methods 3-1 and 3-2 are applied, the base station may transmit an ACK to the UE regarding information related to the occurrence of an event through a response to PRACH (e.g., RAR MAC-CE). Additionally or alternatively, the base station may indicate/change the UE's beam based on the new beam information transmitted through PRACH.

### Embodiment 1

A method of enabling event-based transmission or related UL channel resources through DCI may be applied. In addition, the method may be applied to the methods described above.

For example, as in method 1-3b, the SP CSI reporting method via PUSCH can be utilized/applied to the event-based/reporting method. For example, when a PUSCH resource for SP CSI is activated, the UE may perform event-based reporting through the activated PUSCH resource.

As another example, the CG PUSCH (Type 2) method, as in method 1-3a, can be utilized for event-based UCI/MAC-CE reporting. The CG PUSCH method in a basic wireless communication system is for TB transmission, but the method described above may be for beam/CSI reporting. Beam/CSI reporting information can be transmitted to a base station via UCI/MAC-CE.

As described above, it is assumed that the event-based transmission or the UL channel resource associated therewith is activated through the DCI. In this case, there may be a problem #1 in which the base station may incorrectly determine that the resource is activated even if the UE fails to detect/decode the DCI.

Embodiment 1 relates to a method for solving problem #1. In one embodiment of the present disclosure, when an event-based transmission/report or related channel resource is activated by a DCI, the UE may, after receiving the DCI, perform a CSI/beam report regardless of whether an event occurs at the time of the first transmission/report, or transmit an ACK for the DCI to the base station.

For example, assume a case where CG PUSCH type 1/2 is configured by RRC signaling as in method 1-3a, and a (specific) CG PUSCH resource is activated by DCI. The terminal receives DCI (regardless of whether an event occurs) and, at the time of the first transmission/report, performs a CSI/beam reporting procedure based on the (specific) CG PUSCH resource activated by the DCI, or transmits an ACK for DCI to the base station.

As another example, assume a case where a PUSCH resource for SP CSI transmission is configured by RRC signaling as in method 1-3b, and the PUSCH resource is indicated/activated by DCI. The terminal receives DCI (regardless of whether an event occurs) and, at the time of the first transmission/report, performs a CSI/beam reporting procedure based on the PUSCH resource activated/indicated by the DCI, or transmits an ACK for DCI to the base station.

### Embodiment 2

A UE may perform an event-based transmission/reporting operation, but the base station may not detect/decode the terminal's event report. That is, a problem #2 may occur in which the terminal performs an event-based transmission/reporting operation, but the base station may not detect the terminal's operation. For example, when Method 1-2, Method 1-3 and Method 3-2 are applied, a problem #2 may occur in relation to (some) event information transmission.

Detailed embodiments of Embodiment 2 relate to a method for solving problem #2. When a UE transmits event-based beam information, it may perform an operation according to at least one of Embodiment 2-1, Embodiment 2-2, Embodiment 2-3, and Embodiment 2-4. For example, an operation according to at least one of Embodiment 2-1, Embodiment 2-2, Embodiment 2-3, and Embodiment 2-4 may be applied/used simultaneously.

### Embodiment 2-1

In one embodiment of the present disclosure (Embodiment 2-1), a UE may repeatedly transmit information or reports related to an event to a base station based on the base station's configurations (e.g., configuration information transmitted by the base station to the UE). For example, a plurality of report transmission times may be configured/defined, and the terminal may repeatedly transmit information related to the event to the base station at the configured/defined report transmission times.

Embodiment 2-1 relates to a method for increasing the reliability of transmission by repeatedly transmitting information related to an event. A UE may repeatedly transmit information related to an event to a base station, either continuously or discontinuously. The UE may repeatedly transmit information related to an event according to at least one of the embodiments described below.

### Embodiment 2-1-1

A base station may transmit configuration information related to the transmission period and/or the number of repeated transmissions of information related to an event to a UE. For example, the base station may configure P slots (where P is a natural number greater than or equal to 1) for the UE as the reporting period of information related to an event. In addition, the base station may configure R (where R is a natural number greater than or equal to 1) for the UE as the number of repeated transmissions of information related to an event.

(When an event occurs) The UE may perform repeated transmission of information related to the same event through each of R slots having a slot interval of P. That is, the UE may transmit information related to the same event in each of the R slots, and each of the R slots can have a slot interval of P.

### Embodiment 2-1-2

The reporting period for information related to an event can be configured/defined by P slots (by the base station). Additionally, within one period, R slots with P' slot intervals smaller than P can be additionally set (by the base station). (When an event occurs) the UE may repeatedly transmit information related to the same event through R slots with P' slot intervals (within the period in which the event occurred).

For example, assume a case where "P=4, P'=1 and R=2" is set/defined, where the slot that is the event TO is represented as O and the slot that is not the event TO is represented as x. In this case, slots {1, 2, 3, 4} within one period can be configured as {TO, TO, x, x} and slots {1, 2, 3, 4, 5, 6, 7, 8} within two periods can be set as {TO, TO, x, x, TO, TO, x, x}.

Here, the event TO may collectively refer to the TO that transmits information related to the event and/or the TO that will transmit information related to the event.

### Embodiment 2-1-3

A base station may transmit configuration information to a UE regarding the transmission period and/or the number of repeated transmissions of information related to an event. For example, the base station may configure P slots (where P is a natural number greater than or equal to 1) for the UE as the reporting period of information related to an event. Additionally, the base station may configure R (where R is a natural number greater than or equal to 1) for the UE as the number of repeated transmissions of information related to an event.

(When an event occurs) The UE may repeatedly transmit information related to the event R times using different information within slots with the same P slot interval.

For example, the UE may repeatedly transmit information related to the event to the base station R times using different time resources (e.g., symbols), frequency resources (e.g., frequency positions), or/and spatial resources (e.g., layers, ports, spatial filters) within slots with P slot intervals.

Additionally or alternatively, the UE may transmit information related to the event to the base station R times using different beams/panels. For example, the UE may transmit information related to the event to the base station R times using a simultaneous transmission method across multiple panels.

### Embodiment 2-2

If an event-based report (e.g., transmission of information related to an event) is performed and there is no action by the base station regarding the report even after a certain period of time has elapsed, the UE may perform an event-based re-report (e.g., retransmission of information related to the event).

For example, when an event-based report is performed, a timer related to the report may be operated/started. When the timer expires, the UE may perform an event-based re-report (e.g., retransmission of information related to the event).

The above-described operation may be interpreted as an operation in which the retransmission of information related to the event is not performed for a certain period of time after the event-based report. That is, the UE may transmit information related to the event and not perform retransmission for a certain period of time. If information related to an event is transmitted and an operation by the base station (e.g., transmission of information indicating a beam change or/and transmission of ACK information related to the event) is performed within a certain period of time, the UE may stop/suspend the (re)transmission procedure of information related to the event.

### Embodiment 2-3

A response message/signal from a base station for an event-based report may be defined. If the UE performs an event-based report and does not receive a response message/signal from the base station during a predefined/configured time duration or at a specific time, the UE may retransmit information related to the event to the base station.

Here, the response message/signal may include an ACK message/signal for PUCCH/PUSCH including information related to the event (e.g., beam/CSI information related to the event).

For example, when an event-based report is performed, a timer associated with the report may be operated/started. If no response message/signal is received until the timer expires, the UE may perform an event-based re-report (e.g., retransmission of information associated with the event).

The operation described above may be interpreted as an operation in which the (re)transmission of information related to the UE's event is suspended until a response message/signal from the base station is received or until the timer expires. That is, the UE transmits information related to the event and may not perform retransmission during a predefined/configured time interval (e.g., during the time duration in which the timer operates).

Embodiments 2-2 and 2-3 relate to a method for improving the reception performance of event-related information at a base station by retransmitting event-related information to the base station when normal reception of event-related information at the base station is doubtful.

For example, a timer that starts/operates after the UE transmits information related to an event may be configured by or predefined by the base station. Additionally, the UE's retransmission operation may be suspended for a certain period of time after the information related to the event is transmitted. That is, the UE may not retransmit the information related to the event for a certain period of time (e.g., during the time interval configured in the timer) after transmitting the information related to the event.

### Embodiment 2-4

When a UE (re)transmits information related to an event (e.g., when performing an event-based (re)reporting operation), a high UL transmission power may be configured/applied to the UE's (re)transmission operation. For example, when transmitting information related to an event, the UE may configure/apply a high UL transmission power or perform power boosting.

For example, the operation and characteristics related to a method for setting an open-loop power control configured in a basic wireless communication system (e.g., a method where an SRI field exists on DCI) are as follows:

- A method for configuring an open-loop power control set may be performed to amplify the power of a URLLC transmission when it collides with eMBB traffic from another terminal. When a collision with eMBB traffic from another terminal occurs, the P0 value may be modified to control the open-loop power. Specifically, DCI format 0_1 or 0_2 may be configured to include an "open-loop power control parameter set indication" field. This field may have a size of 1 bit (if the DCI includes an SRI field). If the value of this field is set to 1, a different P0 value may be used for open-loop power control (e.g., power amplification). The value of P0 may be determined based on a list of P0 values set in the RRC (e.g., "p0-PUSCH-SetList-r16") using a one-to-one mapping to SRI code points.

As an example of the present disclosure, when information related to an event is transmitted to a base station via an uplink channel (e.g., PUSCH, etc.), power boosting may be performed based on the value of an open-loop power control parameter set indicator field (included in the DCI). For example, if an SRI field exists in the DCI, the value of the open-loop power control parameter set indicator field may be set to 1, and if an SRI field does not exist in the DCI, the value of the open-loop power control parameter set indicator field may be set to 01 or 10. Additionally, the terminal may expect the value of the open-loop power control parameter set indicator field to be set to 1, 01, or 10.

### Embodiment 3

A procedure for transmitting "information on whether an event has occurred" as an SR (or information related to the SR) as in Method 1-1 may be applied. In this case, a conflict/overlap may occur between the PUCCH resource for transmitting information on whether an event has occurred and other BFRQ/SR PUCCH resources. If such a conflict/overlap occurs, it may be necessary to define the type of UCI or/and related UL channel to be transmitted first.

In basic wireless communication systems, the encoding/RE mapping method of BFRQ, etc., may be the same as the encoding/RE mapping method of SR. That is, BFRQ can be treated as a type of SR and (if necessary) can be expressed as an SR for SCell beam failure recovery or a link recovery request (LRR). If BFRQ overlaps/conflicts with other UL channel resources, BFRQ can be transmitted with a higher priority than a general SR.

As with BFRQ in method 1-1, information regarding whether an event has occurred can be transmitted to the base station using the same encoding/RE mapping method as SR.

Meanwhile, a BFRQ may be generated in a situation where all serving beams have failed or where no current serving beam has failed but a new beam of higher quality has been found. In this case, the BFRQ may be more urgent information than information about whether an event has occurred. Additionally, information related to the event may include information about analog beams in the high-frequency band, and since the reliability and efficiency of TB transmission can be improved depending on the processing of the beam management, information related to the event may be more important than general SR.

Accordingly, for example, the priority of information regarding whether an event has occurred may be equal to or lower than the priority of BFRQ. Also, the priority of information regarding whether an event has occurred may be equal to or higher than the priority of general SR.

Additionally or alternatively, the priority of information related to an event can be defined as being the same as the priority of either SR or BFRQ.

Embodiment 3 relates to a method of transmitting information regarding whether an event (e.g., a beam-related event, etc.) has occurred in the same manner as SR. For example, a UE may transmit information regarding whether an event has occurred to a base station based on encoding, RE mapping, and multiplexing methods applied to SR.

For example, if information regarding whether an event has occurred (e.g., UCI) or an uplink channel including such information overlaps or collides with another channel, the UE may determine the type of information to transmit based on the priority of each channel/information. For example, the priority of information regarding whether an event has occurred may be equal to or lower than the priority of BFRQ. Also, the priority of information regarding whether an event has occurred may be equal to or higher than the priority of general SR.

The method according to Embodiment 3 described above can also be used/applied when performing event-based transmission/reporting through MAC-CE. That is, when transmitting event-based information (e.g., information regarding whether an event has occurred, reporting information regarding an event) through MAC-CE or/and when no available UL-SCH is assigned, the UE may request a UL-SCH to the base station through SR to transmit the MAC-CE.

In basic wireless communication systems, except for exceptional cases (e.g., BFR MAC-CE), general MAC-CE may not be supported to trigger SR. That is, even if there is a MAC-CE to transmit, SR transmission may not be triggered. Also, UCI may not be supported to trigger SR.

Accordingly, MAC-CE/UCI for event-based transmission/reporting can be defined/configured to trigger the transmission of SR. Additionally, the SR may be mapped to (only) a dedicated SR PUCCH resource (such as a BFR procedure), ii) enable the use of an SR PUCCH resource that triggers a logical channel, or iii) enable the use of an SR PUCCH resource for BFR.

### Embodiment 4

Embodiment 4 relates to a method in which a MAC-CE or UCI performing event-based transmission/reporting triggers an SR.

For example, when Method 1-1a, Method 1-1b and Method 2 are applied, information related to the event (e.g., information on whether the event occurred, event-related reporting information, etc.) may be transmitted to the base station via MAC-CE or/and UCI.

For example, a MAC-CE or UCI including information related to an event may trigger an SR (transmission of) to request a resource (e.g., UL-SCH resource, resource related to an uplink channel (e.g., PUSCH, PUCCH, etc.)) to transmit the MAC-CE or UCI.

That is, the UE may transmit an SR to the base station to transmit a MAC-CE or/and UCI including information related to the event, and the UE may receive information corresponding to the SR from the base station (e.g., information about the UL-SCH/uplink resource requested according to the SR). The UE may transmit the MAC-CE or/and UCI to the base station based on the resources related to the information received from the base station.

### Embodiment 5

Embodiment 5 relates to a method related to the transmission of an SR related to event-based transmission/reporting.

Specifically, an SR related to an event-based transmission/reporting (transmitted via MAC-CE or/and UCI) may be transmitted according to at least one of the methods described below. An SR related to an event-based transmission/reporting may collectively refer to an SR requesting a UL-SCH resource to transmit information related to an event.

Method 5-1: SRs related to event-based transmission/reporting may use dedicated SR PUCCH resources. For example, SRs related to event-based transmission/reporting may be transmitted to a base station through dedicated SR PUCCH resources based on an allocated SR ID/setting. That is, a UE may transmit SRs related to event-based transmission/reporting to a base station based on dedicated PUCCH resources associated with a dedicated SR ID/configuration.

Method 5-2: An SR related to event-based transmission/reporting can use an SR PUCCH resource that triggers a logical channel. That is, the UE may transmit an SR related to event-based transmission/reporting to the base station based on an SR PUCCH resource that triggers a logical channel.

Method 5-3: SRs related to event-based transmission/reporting can use SR PUCCH resources for BFR purposes (together). That is, the UE may transmit SRs related to event-based transmission/reporting to the base station based on SR PUCCH resources for BFR purposes.

As described above, the number of SR PUCCH resources configured/supported per BWP in a basic wireless communication system may be limited. For example, one SR PUCCH resource for a logical channel may be supported per BWP. One SR PUCCH resource for a SCell BFR may be supported per BWP (e.g., for STRP BFR) or two (e.g., for MTRP BFR).

Method 5-1 relates to a method for configuring SR PUCCH resources related to MAC-CE/UCI for event-based transmission/reporting separately from SR PUCCH resources on a basic wireless communication system. For example, a base station may transmit configuration information to a UE for configuring SR PUCCH resources related to MAC-CE/UCI for event-based transmission/reporting. Additionally, the base station may transmit configuration information to a UE for configuring separate SR PUCCH resources (e.g., SR PUCCH resources unrelated to events).

Here, priority between SR PUCCHs may be applied according to Embodiment 3. For example, the priority of an SR PUCCH related to MAC-CE/UCI for event-based transmission/reporting (e.g., event-related SR PUCCH) may be lower than or equal to the priority of an SR PUCCH for BFR. Also, the priority of an SR PUCCH related to MAC-CE/UCI for event-based transmission/reporting (e.g., event-related SR PUCCH) may be higher than or equal to the priority of an SR PUCCH for logical channels. If an SR PUCCH related to MAC-CE/UCI for event-based transmission/reporting (e.g., event-related SR PUCCH) overlaps with other SR PUCCH resources, the UE may transmit the SR PUCCH with the higher priority to the base station in priority according to the priority rules described above.

Method 5-2 relates to a method of using SR PUCCH resources that trigger a logical channel together for event-based transmission/reporting. For example, SR PUCCH resources that trigger a logical channel may be used for SR PUCCH transmissions associated with MAC-CE/UCI for event-based transmission/reporting. The priority of SR PUCCH resources associated with MAC-CE/UCI for event-based transmission/reporting may be the same as the priority of SR PUCCH resources that trigger a logical channel.

Method 5-3 relates to a method of using SR PUCCH resources for BFR together for event-based transmission/reporting. For example, SR PUCCH resources for BFR may be used for SR PUCCH transmissions associated with MAC-CE/UCI for event-based transmission/reporting. The priority of SR PUCCH resources associated with MAC-CE/UCI for event-based transmission/reporting may be the same as the priority of SR PUCCH resources for BFR.

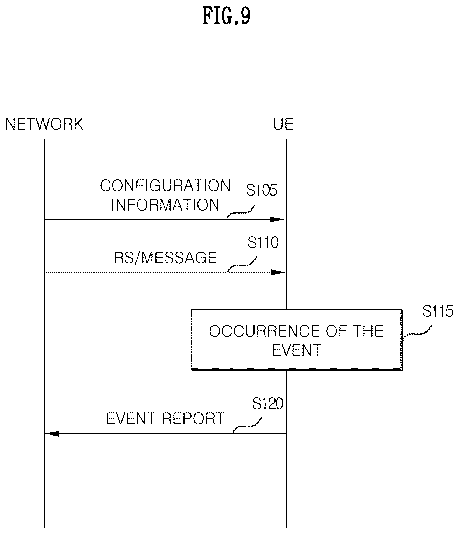

FIG. 9 is a diagram illustrating a signaling procedure of a network side and a UE according to one embodiment of the present disclosure.

FIG. 9 illustrates an example of signaling between a network side and a terminal (UE) in an M-TRP situation to which the examples of the above-described disclosure (e.g., Embodiment 1, Embodiment 2, Embodiment 3, Embodiment 4, Embodiment 5 or/and a combination of one or more detailed Embodiments of the example(s)) may be applied.

Here, UE/a network side is illustrative and may be applied by being substituted with a variety of devices as described by referring to FIG. 10. FIG. 9 is for convenience of description, and it does not limit a scope of the present disclosure. In addition, some step(s) shown in FIG. 9 may be omitted according to a situation and/or a configuration, etc. In addition, the above-described uplink transmission and reception operation, a M-TRP-related operation, etc. may be referred to or used for an operation of a network side/UE in FIG. 9.

In the following description, a network side may be one base station including a plurality of TRPs or may be one cell including a plurality of TRPs. Alternatively, a network side may include a plurality of RRHs(remote radio head)/RRUs(remote radio unit).

In an example, an ideal/non-ideal backhaul may be configured between TRP 1 and TRP 2 configuring a network side. In addition, the following description is described based on a plurality of TRPs, but it may be equally extended and applied to transmission through a plurality of panels/cells and may be extended and applied to transmission through a plurality of RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one UE. A configuration on such a CORESET group (or a CORESET pool) may be performed through higher layer signaling (e.g., RRC signaling, etc.).

In addition, a base station may generally mean an object which performs transmission and reception of data with a UE. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information from the network (S105).

For example, the configuration information may include event-related configuration information (or/and event-based reporting-related configuration information), reporting information configuration information, and UL channel resource information for reporting (e.g., PUCCH/PUSCH). For example, the event-related configuration information may include the type of event, criteria related to the event, thresholds, etc. That is, the event-related configuration information may include criteria and/or thresholds for determining whether an event has occurred or/and the type of event, etc.

For example, a UL channel resource for reporting may include information for configuring a UL channel resource for reporting event-related information, etc. and/or information for describing a resource for reporting other information (e.g., information for reporting separate information not related to the event).

Additionally or alternatively, the configuration information may include configuration information related to each of Embodiment 1, Embodiment 2, Embodiment 3, Embodiment 4, Embodiment 5 or/and one or more combinations of detailed embodiments of the Example(s). Additionally or alternatively, the configuration information may include configuration information related to Method 1-1, Method 1-1a, Method 1-1b, Method 1-2, Method 1-3, Method 1-3a, Method 1-3b, Method 2, Method 3, Method 3-1 and Method 3-2.

The configuration information described above may be transmitted to the UE via upper layer signaling (e.g., SIB, RRC message, MAC CE, etc.), but is not limited thereto. Additionally, the configuration information described above may be transmitted to the terminal via separate higher layer signaling, but some configuration information may be transmitted to the terminal via a single higher layer signaling.

The UE may receive a message/signal (or control information) (e.g., MAC-CE, DCI, etc.) from the base station to activate/start an event-based reporting and/or UL channel resource (S110). For example, the UE may receive an activation message/signal for a UL channel resource from the base station to transmit information related to an event. For example, if the reporting and/or UL channel resource related to the event is indicated/configured by configuration information (e.g., RRC message, etc.), the operation according to step S110 may be omitted.

The UE may monitor whether an event has occurred based on control information and/or configuration information received from the base station. If an event has occurred (S115), the UE may transmit information related to the event to the base station (S120). For example, the UE may transmit information related to the event to the base station using UL channel resources based on control information/configuration information. When transmitting information related to the event, an operation according to the above-described embodiment (e.g., embodiment 1, embodiment 2, embodiment 3, embodiment 4, embodiment 5 or/and a combination of one or more detailed embodiments of the above embodiment(s)) may be performed.

### General Device to which the Present Disclosure may be applied

FIG. 10 is a diagram which illustrates a block diagram of a wireless communication system according to an embodiment of the present disclosure.

In reference to FIG. 10, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving, by a user equipment (UE) from a base station, first configuration information related to an event;
based on an occurrence of the event, encoding, by the UE, information related to the event on a first uplink channel based on second configuration information related to a scheduling request (SR); and
based on the first uplink channel being overlapped with a second uplink channel including the SR or a link recovery request (LRR), transmitting, by the UE to the base station, the first uplink channel or the second uplink channel based on a priority of the information related to the event,
wherein the priority of information related to the event is higher than or equal to a priority of the SR and lower than or equal to a priority of the LRR.

2. The method of claim 1, wherein:
based on the first uplink channel being overlapped with the second uplink channel including the SR, the first uplink channel is transmitted to the base station based on the priority of information related to the event, and
based on the first uplink channel being overlapped with the second uplink channel including the LRR, the second uplink channel is transmitted to the base station based on the priority of information related to the event.

3. The method of claim 1, wherein:
the second configuration information related to the SR includes at least one of a period, offset, priority, resource, encoding method, or identifier (ID) of the SR.

4. The method of claim 1, wherein:
the first configuration information includes information related to a transmission period and number of transmissions of information related to the event, and,
based on the transmission period and number of transmissions of information related to the event, information related to the event is repeatedly transmitted to the base station.

5. The method of claim 1, wherein:
based on the first uplink channel being transmitted to the base station, a timer for a retransmission of information related to the event is operated, and
based on a response message for the information related to the event being not received from the base station before the timer expires, the information related to the event is retransmitted to the base station.

6. The method of claim 5, wherein:
based on a response message regarding the information related to the event being received from the base station before the timer expires, the operation of the timer and the retransmission of information related to the event are stopped.

7. The method of claim 6, wherein:
the response message includes an acknowledgement (ACK) message for the first uplink channel.

8. The method of claim 1, wherein:
downlink control information related to the first uplink channel includes a power control parameter set indication field, and
a power of the first uplink channel is determined based on the power control parameter set indication field.

9. The method of claim 1, wherein:
downlink control information related to the first uplink channel is transmitted from the base station to the UE, and
an ACK message for the downlink control information is transmitted from the UE to the base station.

10. The method of claim 1, wherein:
the first uplink channel is a configured grant (CG) physical uplink shared channel (PUSCH) or physical uplink control channel (PUCCH).

11. The method of claim 1, wherein:
the information related to the event is included in uplink control information (UCI).

12. A user equipment (UE) comprising:
at least one transceiver; and
at least one processor coupled to the at least one transceiver,
the at least one processor is configured to:
receive, from a base station, first configuration information related to an event through the at least one transceiver;
based on an occurrence of the event, encode information related to the event on a first uplink channel based on second configuration information related to a scheduling request (SR); and
based on the first uplink channel being overlapped with a second uplink channel including the SR or a link recovery request (LRR), transmit, to the base station through the at least one transceiver, the first uplink channel or the second uplink channel based on a priority of the information related to the event,
wherein the priority of information related to the event is higher than or equal to a priority of the SR and lower than or equal to a priority of the LRR.

13. A method comprising:
transmitting, by a base station to a user equipment (UE), first configuration information related to an event; and
based on an occurrence of said event, receiving, by the base station from the UE, i) a first uplink channel including information related to the event or ii) a second uplink channel including a scheduling request (SR) or a link recovery request (LRR), based on a priority related to event,
wherein the first uplink channel and the second uplink channel are overlapped in a same time resource,
wherein the information related to the event is encoded on the first uplink channel based on second configuration information related to the SR, and
wherein a priority of the information related to the event is higher than or equal to a priority of the SR and lower than or equal to a priority of the LRR.

14. A base station comprising:
at least one transceiver; and
at least one processor coupled to the at least one transceiver,
the at least one processor is configured to:
transmit, to a user equipment (UE) through the at least one transceiver, first configuration information related to an event; and
based on an occurrence of said event, receive, from the UE through the at least one transceiver, i) a first uplink channel including information related to the event or ii) a second uplink channel including a scheduling request (SR) or a link recovery request (LRR), based on a priority related to event,
wherein the first uplink channel and the second uplink channel are overlapped in a same time resource,
wherein the information related to the event is encoded on the first uplink channel based on second configuration information related to the SR, and
wherein a priority of the information related to the event is higher than or equal to a priority of the SR and lower than or equal to a priority of the LRR.

15. A processing apparatus configured to control a user equipment (UE), the processing apparatus comprising:
one or more processors; and
one or more computer memories operably coupled to the one or more processors and storing instructions that, based on being executed by the one or more processors, perform a method according to any one of claims 1 to 11.

16. One or more non-transitory computer-readable media storing one or more instructions,
wherein the one or more instructions are executed by one or more processors to control an apparatus to perform a method according to any one of claims 1 to 11.
